# EUROPÄISCHE PATENTANMELDUNG

(11) **EP 1 036 718 A2**
(43) Veröffentlichungstag der Anmeldung: **20.09.2000**
(21) Anmeldenummer: 00890069.8
(22) Anmeldetag: 14.03.2000
(51) Int. Cl.: B60T 7/20, B60T 13/68, B60T 11/10

(54) **Hydraulische Bremsanlage**

(30) Priorität: 16.03.1999 AT 46199
(71) Anmelder: Pühringer, Hermann, Ing., 4523 Neuzeug (AT)
(72) Erfinder: Pühringer, Hermann, Ing., 4523 Neuzeug (AT)
(74) Vertreter: Hübscher, Helmut, Dipl.-Ing.

(57) **Zusammenfassung**

Es wird eine hydraulische Bremsanlage für einen an ein Zugfahrzeug anhängbaren, landwirtschaftlichen Anhänhger mit einem am Zugfahrzeug vorgesehenen, in Abhängigkeit von der Betätigung der Betriebsbremse (11) des Zugfahrzeugs ansteuerbaren, mit einer Einrichtung (10) zum Einstellen des Bremsdruckes versehenen Bremsventil (6), das eine mit einer hydraulischen Anschlußleitung (8) des Anhängers kuppelbare Hydraulikleitung (7) entweder mit einer Druckleitung (4) oder einer Rückleitung (5) einer Hydraulikeinrichtung (1) des Zugfahrzeuges verbindet, und mit einem über die Anschlußleitung ladbaren Druckspeicher (19) am Anhänger beschrieben, dessen wenigstens einen Bremszylinder (16) beaufschlagende Bremsleitung (17) über ein Steuerventil (18) einerseits an die Anschlußleitung (8) und anderseits an den Druckspeicher (19) anschließbar ist. Um vorteilhafte Konstruktionsbedingungen zu schaffen, wird vorgeschlagen, daß das Steuerventil (18) aus einem gegen Federkraft beaufschlagbaren, über eine elektrische Steuerleitung (20) der Zugmaschine erregbaren Elektromagnetventil mit einer die Bremsleitung (17) mit dem Druckspeicher (19) verbindenden Grundstellung besteht und daß in der Bremsleitung (17) ein den Bremszylinder (16) wahlweise mit einer Ablaufleitung (26) verbindendes Umschaltventil (24) vorgesehen ist.

## Beschreibung

Die Erfindung bezieht sich auf eine hydraulische Bremsanlage für einen an ein Zugfahrzeug anhängbaren, landwirtschaftlichen Anhänhger mit einem am Zugfahrzeug vorgesehenen, in Abhängigkeit von der Betätigung der Betriebsbremse des Zugfahrzeugs ansteuerbaren, mit einer Einrichtung zum Einstellen des Bremsdruckes versehenen Bremsventil, das eine mit einer hydraulischen Anschlußleitung des Anhängers kuppelbare Hydraulikleitung entweder mit einer Druckleitung oder einer Rückleitung einer Hydraulikeinrichtung des Zugfahrzeuges verbindet, und mit einem über die Anschlußleitung ladbaren Druckspeicher am Anhänger, dessen wenigstens einen Bremszylinder beaufschlagende Bremsleitung über ein Steuerventil einerseits an die Anschlußleitung und anderseits an den Druckspeicher anschließbar ist.

Um bei einer hydraulischen Bremsanlage für einen landwirtschaftlichen Anhänger eine Bremsung des vom Zugfahrzeug abgekuppelten Anhängers über eine Bremszylinderbeaufschlagung sicherstellen zu können, ist es bekannt, auf dem Anhänger einen Druckspeicher vorzusehen, der über eine hydraulische Anschlußleitung von der Hydraulikeinrichtung des Zugfahrzeuges her geladen werden kann, so daß nach dem Abkuppeln des Anhängers vom Zugfahrzeug ein ausreichender Hydraulikdruck für die Anhängerbremsung zur Verfügung steht. Das Umschalten der Bremszylinderbeaufschlagung des Anhängers von der Hydraulikeinrichtung des Zugfahrzeuges auf den Druckspeicher erfolgt über ein Steuerventil, das mechanisch beim Lösen der Kupplungsverbindung zwischen Zugfahrzeug und Anhänger beispielsweise über eine Reißleine verstellt wird. Die Bremsung des an das Zugfahrzeug angekuppelten Anhängers bei einer Betätigung der Betriebsbremse des Zugfahrzeuges wird über ein dem Zugfahrzeug zugehöriges Bremsventil eingeleitet, das bei seiner Ansteuerung durch die Betriebsbremse die Hydraulikeinrichtung des Zugfahrzeuges mit der hydraulischen Bremsanlage des Anhängers verbindet. Da dieses Bremsventil mit einer Einrichtung zum Einstellen des Bremsdruckes versehen ist, kann die Bremskraft für den Anhänger vom Zugfahrzeug aus an den Beladezustand des Anhängers angepaßt werden. Nachteilig bei dieser bekannten hydraulischen Bremsanlage für den Anhänger ist allerdings, daß der angekuppelte Anhänger nur über die Betriebsbremse des Zugfahrzeuges, nicht aber über eine Feststellbremse oder in Abhängigkeit vom Betriebszustand des Motors des Zugfahrzeuges gebremst werden kann.

Bei einer anderen bekannten hydraulischen Bremsanlage für einen Anhänger bestehen die Bremszylinder aus zwei nacheinander hydraulisch beaufschlagbaren Zylindereinheiten, von denen eine durch eine Bremsfeder belastet wird, so daß zum Lösen der Bremse ein hydraulischer Gegendruck zur Bremsfeder aufgebaut werden muß. Wird dieser Beaufschlagungsdruck über die Vorspannkraft einer die andere Zylindereinheit beaufschlagenden Lüftungsfeder hinaus vergrößert, so erfolgt ebenfalls eine Bremsbeaufschlagung. Dies bedeutet, daß zum Lösen der Anhängerbremse über die Hydraulikeinrichtung des Zugfahrzeuges ein bestimmter Betriebsdruck aufgebaut werden muß, um die hydraulische Bremsvorrichtung des Anhängers lösen zu können. Eine Verstärkung dieses Betriebsdruckes durch die Betriebsbremse des Zugfahrzeuges führt dann zu einer Anhängerbremsung. Als nachteilig bei dieser bekannten hydraulischen Bremsvorrichtung muß die aufwendige Konstruktion angesehen werden, die eine zusätzliche hydraulische Handpumpe erfordert, um die Bremsvorrichtung des abgekuppelten Anhängers lösen zu können.

Der Erfindung liegt somit die Aufgabe zugrunde, eine hydraulische Bremsanlage für einen landwirtschaftlichen Anhänger der eingangs geschilderten Art so auszugestalten, daß mit vergleichsweise einfachen Mitteln nicht nur eine wiederholte Betätigung der Bremsanlage des vom Zugfahrzeug abgekuppelten Anhängers, sondern auch eine Bremsbetätigung des angekuppeltem Anhängers in Abhängigkeit von der Feststellbremse und dem Betriebszustand des Motors des Zugfahrzeuges möglich wird.

Die Erfindung löst die gestellte Aufgabe dadurch, daß das Steuerventil aus einem gegen Federkraft beaufschlagbaren, über eine elektrische Steuerleitung der Zugmaschine erregbaren Elektromagnetventil mit einer die Bremsleitung mit dem Druckspeicher verbindenden Grundstellung besteht und daß in der Bremsleitung ein den Bremszylinder wahlweise mit einer Ablaufleitung verbindendes Umschaltventil vorgesehen ist.

Da das dem Anhänger zugehörige Steuerventil aus einem gegen Federkraft beaufschlagbaren Elektromagnetventil besteht, das über eine elektrische Steuerleitung von der Zugmaschine her erregt wird, wird beim Unterbrechen der Erregung des Elektromagnetventils der Anhänger gebremst, weil das Steuerventil in seiner federbeaufschlagten Grundstellung den anhängerseitigen Druckspeicher mit der Bremsleitung der Bremsanlage verbindet, so daß der Bremszylinder vom Druckspeicher her beaufschlagt wird. Die Bremsung des Anhängers erfolgt somit nicht nur automatisch beim Abkuppeln des Anhängers vom Zugfahrzeug, sondern auch bei einem Abreißen des Anhängers vom Zugfahrzeug, ohne daß hiefür Abreißleinen od. dgl. erforderlich wären. Die mit dem Abkuppeln des Anhängers betätigte Bremsanlage des Anhängers kann von Hand aus über ein Umschaltventil gelöst werden, das in die Bremsleitung eingeschaltet ist und beim Umschalten den Bremszylinder mit einer Ablaufleitung verbindet, die vorzugsweise in einem Auffangbehälter für die Bremsflüssigkeit mündet. Bei einer entsprechenden Auslegung des Druckspeichers kann durch wiederholtes Umschalten des Umschaltventils der abgekuppelte Anhänger wiederholt gebremst werden. Beim Ankuppeln des Anhängers an das Lastfahrzeug ist jedoch die Bremsstellung des Umschaltventiles zu sichern, damit die hydraulische Bremsanlage des Anhängers vom Zugfahrzeug her betätigt werden kann.

Da bei der Erregung des elektromagnetischen Steuerventils die Bremsanlage des Anhängers mit der Hydraulikeinrichtung des Zugfahrzeuges verbunden wird, erfolgt die Betätigung der Bremsanlage des angekuppelten Anhängers über das Bremsventil des Zugfahrzeuges. Ist die Bremsleitung der Bremsanlage des Anhängers über das Bremsventil des Zugfahrzeuges mit der Rückleitung der Hydraulikeinrichtung verbunden, so wird die Bremsanlage des Anhängers gelöst. Zum Bremsen des Anhängers ist demnach die Betriebsbremse des Zugfahrzeuges zu betätigen, wobei das Bremsventil im Sinne einer Verbindung der Druckleitung der Hydraulikeinrichtung des Zugfahrzeuges mit der Bremsleitung des Anhängers umgesteuert wird. Mit einer von der Betriebsbremse des Zugfahrzeuges abhängigen Bremsung des Anhängers wird zugleich der Druckspeicher auf dem Anhänger geladen wird.

Die elektrische Steuerleitung zur Erregung des elektromagnetischen Steuerventils bietet eine vorteilhafte Voraussetzung dafür, daß der Anhänger in einfacher Weise in Abhängigkeit von der Betätigung einer Feststellbremse oder vom Betriebszustand des Verbrennungsmotors des Zugfahrzeuges gebremst werden kann. Zu diesem Zweck braucht ja lediglich die Verbindung der elektrische Steuerleitung für das elektromagnetische Steuerventil mit einer Spannungsquelle z. B. in Abhängigkeit vom Schmiermitteldruck des Verbrennungsmotors des Zugfahrzeuges und/oder vom Ladestrom der Lichtmaschine unterbrochen zu werden, um das elektromagnetischen Steuerventil zufolge des bei einem Abstellen des Verbrennungsmotors absinkenden Schmiermitteldruckes und/oder Ladestromes der Lichtmaschine zu entregen, wodurch das Steuerventil umgeschaltet und die hydraulische Bremsanlage des Anhängers vom Druckspeicher her beaufschlagt wird. In ähnlicher Weise kann in die elektrische Steuerleitung für das elektromagnetische Steuerventil ein über eine Feststellbremse des Zugfahrzeuges betätigbarer Unterbrechungsschalter eingeschaltet werden, der beim Betätigen der Feststellbremse den elektrischen Steuerkreis für das Steuerventil unterbricht und für eine Umschaltung des Steuerventiles sorgt.

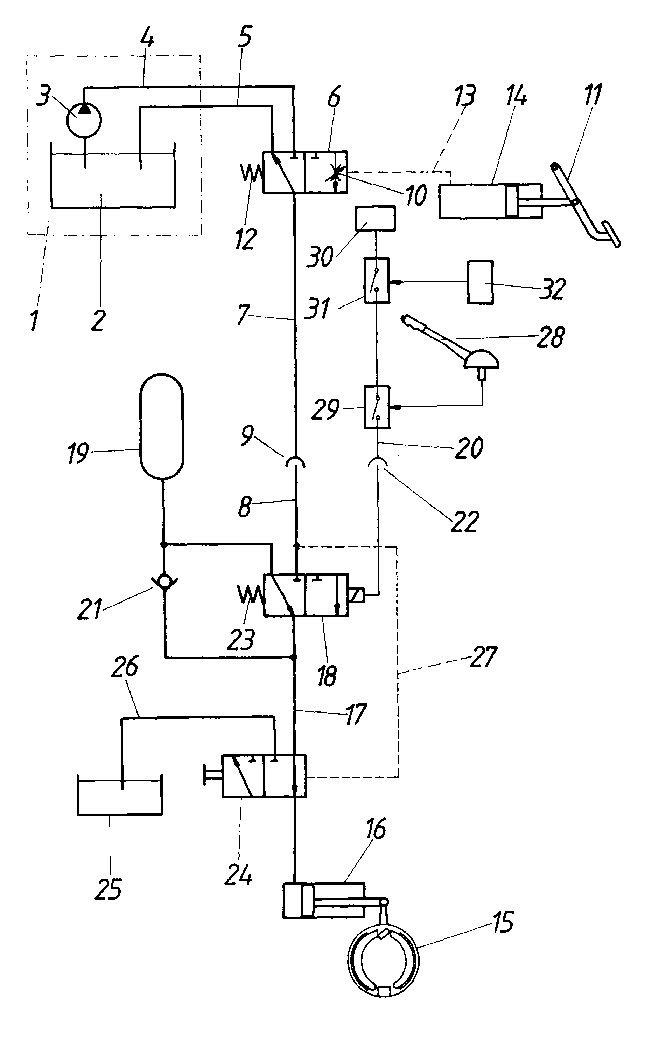

In der Zeichnung ist der Erfindungsgegenstand beispielsweise dargestellt, und zwar wird eine erfindungsgemäße hydraulische Bremsanlage für einen Anhänger in einem vereinfachten Blockschaltbild gezeigt.

Gemäß dem dargestellten Ausführungsbeispiel umfaßt die Hydraulikeinrichtung 1 des nicht näher dargestellten Zugfahrzeuges einen Hydraulikmittelbehälter 2, an den über eine Pumpe 3 eine Druckleitung 4 sowie eine Rückleitung 5 angeschlossen sind. Mit Hilfe eines Bremsventiles 6 können die Druckleitung 4 und die Rücklaufleitung 5 der Hydraulikeinrichtung 1 wahlweise mit einer Hydraulikleitung 7 verbunden werden, an die eine hydraulische Anschlußleitung 8 des Anhängers über eine geeignete Kupplung 9 angeschlossen werden kann. Das Bremsventil 6, das eine Einrichtung 10 zum Einstellen des Hydraulikmitteldruckes aufweist, wird in Abhängigkeit von der Betätigung der Betriebsbremse 11 des Zugfahrzeuges gegen die Kraft einer Rückstellfeder 12 angesteuert. Diese Ansteuerung kann unterschiedlich ausfallen, beispielsweise elektrisch über einen Bremslichtschalter. Im dargestellten Ausführungsbeispiel wird das Bremsventil 6 jedoch über eine hydraulische Steuerleitung 13 beaufschlagt, die an die Bremszylinder 14 des Zugfahrzeuges angeschlossen ist.

Die Bremsen 15 des Anhängers werden von wenigstens einem Bremszylinder 16 betätigt, der über eine Bremsleitung 17 beaufschlagt werden kann. Diese Bremsleitung 17 wird über ein elektromagnetisches Steuerventil 18 entweder mit einem Druckspeicher 19 oder mit der Anschlußleitung 8 verbunden. Die Ansteuerung des Steuerventiles 18 erfolgt über eine elektrische Steuerleitung 20 vom Zugfahrzeug her. Wird das elektromagnetische Steuerventil 18 über die Steuerleitung 20 erregt, so wird die Bremsleitung 17 über das Bremsventil 6 mit der Hydraulikeinrichtung 1 des Zugfahrzeuges 1 verbunden. In der dargestellten Grundstellung des Bremsventiles 6 bedeutet dies eine Lösung der Bremsen 15 des Anhängers, weil die Bremsleitung 17 mit der Rücklaufleitung 5 der Hydraulikeinrichtung 1 des Zugfahrzeuges verbunden ist. Wird die Betriebsbremse 11 des Zugfahrzeuges betätigt und damit das Bremsventil 6 über die hydraulische Steuerleitung 13 umgeschaltet, so wird der Bremszylinder 16 über die Druckleitung 4 beaufschlagt, und zwar mit einem Bremsdruck, der über die Einrichtung 10 an das Ladegewicht des Anhängers angepaßt werden kann. Da die Bremsleitung 17 über ein Rückschlagventil 21 an den Druckspeicher 19 angeschlossen ist, wird mit der Betätigung der Betriebsbremse 11 des Zugfahrzeuges nicht nur die Bremse 15 des Anhängers betätigt, sondern auch der Druckspeicher 19 geladen. Bei einer Entregung des Steuerventiles 18, beispielsweise durch ein Lösen der elektrischen Kupplung 22 der Steuerleitung 20 zwischen dem Zugfahrzeug und dem Anhänger, wird das Steuerventil 18 durch seine Rückstellfeder 23 in die dargestellte Grundstellung geschaltet, in der die Bremsleitung 17 mit dem Druckspeicher 19 verbunden und damit der Bremszylinder 16 beaufschlagt wird. Die dadurch bedingte Bremsung des Anhängers kann von Hand aus durch ein Umschaltventil 24 gelöst werden, das bei vom Zugfahrzeug abgekuppeltem Anhänger den Bremszylinder 16 mit einer in einen Auffangbehälter 25 führenden Ablaufleitung 26 verbindet. Durch ein neuerliches Umstellen des Umschaltventiles 24 kann der Bremszylinder 16 wieder über den Druckspeicher 19 beaufschlagt werden, wenn dieser Druckspeicher 19 für mehrere Bremszyklen ausgelegt ist. Das Umschaltventil 24 muß in die gezeichnete Schaltstellung geschaltet werden, um nach dem Ankuppeln des Anhängers an das Zugfahrzeug die ordnungsgemäße Betätigung der Bremsanlage des Anhängers sicherzustellen. Zu diesem Zweck kann das Umschaltventil 24 über eine vom Beaufschlagungsdruck der Anschlußleitung 8 abhängige Steuerleitung 27 beaufschlagt werden.

Da bei einer Entregung des elektromagnetischen Steuerventiles 18 die Bremse 15 des Anhängers unabhängig von der Betätigung der Betriebsbremse 11 des Zugfahrzeuges über den Druckspeicher 19 betätigt wird, kann die Betätigung der Feststellbremse 28 des Zugfahrzeuges in einfacher Weise zu einer Zwangsbremsung des Anhängers führen, wenn mit der Feststellbremse 28 ein Unterbrechungsschalter 29 in der Steuerleitung 20 betätigt wird, so daß das elektromagnetische Steuerventil 18 von einer Spannungsquelle 30 des Zugfahrzeuges abgetrennt wird. In ähnlicher Weise kann ein Schalter 31 in die Steuerleitung 20 eingebunden sein, der von einem Geber 32 für den Ladestrom der Lichtmaschine und/oder für den Schmiermitteldruck des Verbrennugsmotors des Zugfahrzeuges angesteuert wird, was eine Betätigung der Anhängerbremse 15 über den Schalter 31 erlaubt, wenn der Verbrennungsmotor des Zugfahrzeuges abgestellt wird oder abstirbt. Als Geber 32 können Schalter für die Kontrollleuchten des Ladestroms bzw. des Schmiermitteldruckes in einfacher Weise herangezogen werden.

## Patentansprüche

1. Hydraulische Bremsanlage für einen an ein Zugfahrzeug anhängbaren, landwirtschaftlichen Anhänhger mit einem am Zugfahrzeug vorgesehenen, in Abhängigkeit von der Betätigung der Betriebsbremse (11) des Zugfahrzeugs ansteuerbaren, mit einer Einrichtung (10) zum Einstellen des Bremsdruckes versehenen Bremsventil (6), das eine mit einer hydraulischen Anschlußleitung (8) des Anhängers kuppelbare Hydraulikleitung (7) entweder mit einer Druckleitung (4) oder einer Rückleitung (5) einer Hydraulikeinrichtung (1) des Zugfahrzeuges verbindet, und mit einem über die Anschlußleitung ladbaren Druckspeicher (19) am Anhänger, dessen wenigstens einen Bremszylinder (16) beaufschlagende Bremsleitung (17) über ein Steuerventil (18) einerseits an die Anschlußleitung (8) und anderseits an den Druckspeicher (19) anschließbar ist, dadurch gekennzeichnet, daß das Steuerventil (18) aus einem gegen Federkraft beaufschlagbaren, über eine elektrische Steuerleitung (20) der Zugmaschine erregbaren Elektromagnetventil mit einer die Bremsleitung (17) mit dem Druckspeicher (19) verbindenden Grundstellung besteht und daß in der Bremsleitung (17) ein den Bremszylinder (16) wahlweise mit einer Ablaufleitung (26) verbindendes Umschaltventil (24) vorgesehen ist.

2. Bremsanlage nach Anspruch 1, dadurch gekennzeichnet, daß die elektrische Steuerleitung (20) für das elektromagnetische Steuerventil (18) in Abhängigkeit vom Schmiermitteldruck des Verbrennungsmotors des Zugfahrzeuges und/oder vom Ladestrom der Lichtmaschine an eine Spannungsquelle (30) anschließbar ist.

3. Bremsanlage nach Anspruch 1 oder 2, dadurch gekennzeichnet, daß in die elektrische Steuerleitung (20) für das elektromagnetische Steuerventil (18) ein über eine Feststellbremse (28) des Zugfahrzeuges betätigbarer Unterbrechungsschalter (29) vorgesehen ist.
